# EUROPÄISCHE PATENTSCHRIFT

(11) **EP 3 004 817 B1**
(45) Veröffentlichungstag und Bekanntmachung des Hinweises auf die Patenterteilung: **06.09.2017**
(21) Anmeldenummer: 14738608.0
(22) Anmeldetag: 04.06.2014
(51) Int. Cl.: G01H 9/00, G01H 17/00

(54) **VERFAHREN UND VORRICHTUNG ZUR DETEKTION UND LOKALISATION VON INFRASCHALL**
METHOD AND DEVICE FOR DETECTING AND LOCALIZING INFRASOUND
PROCÉDÉ ET DISPOSITIF DE DÉTECTION ET LOCALISATION D'INFRASONS

(30) Priorität: 04.06.2013 DE 102013105726
(43) Veröffentlichungstag der Anmeldung: 13.04.2016
(73) Patentinhaber: Biedermann, Petra Sonja, 23669 Timmendorfer Strand (DE)
(72) Erfinder: Biedermann, Petra Sonja, 23669 Timmendorfer Strand (DE)
(74) Vertreter: Tahhan, Nader Isam Mark
(86) Internationale Anmeldenummer: PCT/IB2014/061947
(87) Internationale Veröffentlichungsnummer: WO 2014/195883

(56) Entgegenhaltungen:
- DE-A1-102005 053 038
- FR-A1- 2 822 392
- US-A- 3 048 075
- US-A- 3 547 520
- US-A1- 2011 238 314
- SVIRKUNOV P N ET AL: "Absorption of infrasonic waves in a cloudy medium", IZVESTIYA, ATMOSPHERIC AND OCEANIC PHYSICS, NAUKA/INTERPERIODICA, MO, Bd. 48, Nr. 6, 4. Dezember 2012 (2012-12-04), Seiten 625-630, XP035148525, ISSN: 1555-628X, DOI: 10.1134/S0001433812060126

## Beschreibung

Die Erfindung betrifft ein Verfahren und eine Vorrichtung zur Detektion von Infraschall. Insbesondere betrifft die Erfindung ein Verfahren und eine Vorrichtung, womit die Richtung und optional die Lage einer Infraschallquelle bestimmbar sind.

### Stand der Technik und Nachteile

Als Infraschall werden Schallwellen bezeichnet, die unterhalb der vom menschlichen Gehör wahrnehmbaren Grenze von ca. 16 Hz, jedoch oberhalb von natürlichen Luftdruckschwankungen liegen. Je tiefer deren Frequenz ist, desto ungehinderter breiten sich Infraschallwellen aus. Durch Luft übertragener Infraschall kann noch in mehreren Kilometern Entfernung von einer Quelle nachgewiesen werden; in Wasser ist die Entfernung gar um ein Vielfaches größer.

Nicht natürliche Quellen für Infraschall sind beispielsweise Überschallflugzeuge, Sprengungen (auch z.B. durch Waffentests), aber auch Maschinen nutzende Industriebetriebe, sowie Lüftungsanlagen. Auch Windräder, deren sich bewegende Rotorblätter beim Passieren der tiefsten Stellung eine Verdichtung der Luft zwischen sich und dem Turm hervorrufen, erzeugen rhythmisch niederfrequente Schwingungen. Ebenso kann Schwerlastverkehr auf Brückenbauwerken Infraschall erzeugen. Weitere Quellen sind z.B. Schiffsbewegungen oder hoher Seegang. Auch Erdbeben erzeugen Infraschallwellen, welche sich z.B. mittels einer aus der Druckschrift DE 10 2005 053038 A1 bekannten Vorrichtung mittels spektraler Detektion von mit dem Beben einhergehendem Nachthimmellicht ("airglow") detektieren lassen. Auch die Druckschrift US 2011/238312 A1 verwendet Infraschalldetektoren zur Erdbebenvorhersage, die jedoch nicht näher spezifiziert sind.

Es besteht ein Interesse an einfachen, wirkungsvollen Messverfahren für Infraschall, da wiederholt berichtet wird, dass Infraschall negative Auswirkungen auf das Wohlbefinden und Gesundheit habe. Aber auch die Möglichkeit von Schäden an Bauwerken durch dauerhafte Infraschalleinwirkung erfordert dessen Bestimmung.

Allerdings gestaltet sich das Messen derartiger Schallwellen als schwierig, da insbesondere in der Natur vielfältige Störungen auftauchen, welche den Infraschall überlagern und die Identifikation einer Quelle erschweren. Hierzu zählen beispielsweise Wind, Lüftungsanlagen, LKW, Züge, fließende Gewässer oder Regen. Eine Visualisierung von hörbarem Schall, z.B. Musik, ist beispielsweise aus den Dokumenten FR2822392 und US3048075 bekannt. Während herkömmliche akustische Schalldruckmikrofone wenn überhaupt, dann nicht tief in den Infraschallbereich hineinreichen, sind Drucksensoren zumeist nicht empfindlich genug. Zudem ist die Messung mit speziellen Geräten wie Mikrobarometern teuer.

### Aufgabe der Erfindung und Lösung

Die Aufgabe der Erfindung ist es, ein kostengünstiges Detektionsverfahren für Infraschall, ein Lokalisationsverfahren für Infraschallquellen, sowie eine Vorrichtung zur Durchführung dieser Detektions- bzw. Lokalisationsverfahren bereitzustellen.

Die Aufgabe wird durch ein Detektionsverfahren nach Anspruch 1, ein Lokalisierungsverfahren nach Anspruch 6, eine Detektionssvorrichtung nach Anspruch 8, sowie ein Lokalisationssystem nach Anspruch 14 gelöst. Vorteilhafte Ausführungsformen sind den jeweiligen Unteransprüchen, der nachfolgenden Beschreibung sowie den Figuren zu entnehmen.

Nachfolgend wird zunächst das erfindungsgemäße Detektionsverfahren beschrieben. Anschließend erfolgt die Beschreibung eines dieses Detektionsverfahren nutzenden Lokalisationsverfahrens sowie eine Beschreibung von Vorrichtungen, mit welcher dieses Mess- bzw. Lokalisationsverfahren durchgeführt werden können.

Das Detektionsverfahren dient der Detektion von Infraschall an einem Messort. Erfindungsgemäß ist ein Behälter mit einem in Trägermedium gebetteten Nebel teilgefüllt, so dass eine Nebeloberfläche vorliegt. Diese wird einer Infraschallquelle ausgesetzt. Die Infraschallquelle befindet sich bevorzugt im Wesentlichen in derselben Ebene wie die Nebeloberfläche. Erfindungsgemäß führt die sich aufgrund der eintreffenden Infraschallwelle ergebende Druckänderung über die Zeit zur Bildung einer optisch detektierbaren gerichteten Front an der Nebeloberfläche, welche alsdann manuell, halbautomatisch oder automatisch ausgewertet wird.

Als Trägermedium kommt insbesondere ein Gas wie Luft, und als Nebel kommen vorzugsweise Tröpfchen aus Wasser in Betracht. Diese können durch bekannte Verfahren erzeugt werden. Aufgrund der Tatsache, dass die Tröpfchen zu Boden sinken und sich am Grunde des Behälters sammeln, bildet sich die o.g. Nebeloberfläche. Der Nebel kann jedoch auch aus Festkörperpartikeln (Rauch) oder dergleichen bestehen. Durch Vermischung mit dem Trägermedium schweben die Partikel in diesem, wobei sich nach gewisser Zeit besagte Nebeloberfläche bilden muss; die Masse der Partikel darf also nicht vollständig vom Auftrieb im Trägermedium aufgehoben werden.

Prinzipiell können auch Partikel in Flüssigkeiten vergleichbare Resultate erzeugen, weswegen vorliegend der Begriff des "Nebels" und des Trägermediums definitionsgemäß weit gefasst sein soll. Allgemein, und insbesondere in Fällen, in welchem mit einer Flüssigkeit als Trägermedium gearbeitet wird, kann auch der Begriff der "Phasengrenze" anstatt der "Nebeloberfläche" benutzt werden.

Durch das erfindungsgemäße Detektionsverfahren können ansonsten schwer und nur mit großem Aufwand detektierbare Infraschallereignisse sichtbar und somit detektierbar gemacht werden. Das Detektionsverfahren ist einfach und erlaubt zumindest eine qualitative Detektion von Infraschall. Insbesondere die Richtung, in welcher die Infraschallquelle liegt, lässt sich bestimmen, da die gerichtete Front in etwa senkrecht zur Einfallsrichtung des Infraschalls steht.

Aus diesem Grunde ist es auch vorteilhaft, wenn die Ebenen der Nebeloberfläche und der Infraschallquelle nicht zu stark voneinander abweichen. Trotzdem kann das Detektionsverfahren auch dann angewendet werden, wenn sich die Infraschallquelle beispielsweise oberhalb der Detektionsvorrichtung befindet. Die Front verläuft dann jedoch nicht im Wesentlichen parallel zur Nebeloberfläche, sondern in etwa in vertikaler Richtung, was optisch weniger gut detektierbar ist. Aufgrund der Schwerkraft wird sich o.g. Phasengrenze jedoch immer parallel zur Erdoberfläche ausbilden.

Es ist sogar möglich, das erfindungsgemäße Verfahren im Rahmen des Überfliegens von vermuteten Infraschallquellen anzuwenden, wie Versuche gezeigt haben.

Die Erfindung ermöglicht auf kostengünstige Weise eine Detektion von Infraschallwellen, da zur Durchführung des Detektionsverfahrens nur einfache Komponenten benötigt werden, wie weiter unten gezeigt wird.

Nach einer bevorzugten Ausführungsform wird die Nebeloberfläche beleuchtet, um dieselbe besser optisch detektierbar zu machen. Insbesondere ein seitliches Auftreffen von Licht auf die Nebeloberfläche erlaubt eine gute Erkennbarkeit des Auftretens der gerichteten Front, sofern diese von einer Seite zur anderen läuft, was zumindest im Falle in etwa koplanarer Ebenen von Nebeloberfläche und Infraschallquelle zutrifft.

Durch stroboskopische Beleuchtung kann die Bewegungsgeschwindigkeit und/oder Höhe der Front leichter erkennbar sein. Diese wiederum können ein Maß für die Intensität und/oder Frequenz der Infraschallwelle darstellen.

Nach einer bevorzugten Ausführungsform entstammt der Nebel einer vernebelbaren Flüssigkeit und wird durch einen Vernebler erzeugt, welcher in dem Behälter oder an einer Wand desselben angeordnet ist. Somit steht der Vernebler direkt oder indirekt mit dieser Flüssigkeit in Kontakt, wobei die Flüssigkeit bevorzugt Wasser ist.

Besonders bevorzugt ist die Flüssigkeit dunkel gefärbt. Dies erhöht den Kontrast zwischen der typischerweise und aufgrund der optionalen Beleuchtung eher als hell wahrgenommenen Nebeloberfläche und dem - für die Messung ohnehin nicht relevanten - Untergrund, der durch Flüssigkeitsoberfläche und/oder Boden des Behälters gebildet ist.

Vorzugsweise erfolgt die Detektion über einen bestimmten Zeitraum hinweg, besteht also nicht nur aus einer einzelnen Momentaufnahme zu einem bestimmten Zeitpunkt.

Als kürzester Zeitraum kann eine Sekunde angesehen werden. In einem typischen Behälter mit einem Durchmesser von vierzig Zentimetern benötigt eine gerichtete Front in etwa eine bis zwei Sekunden, um den Behälter zu durchqueren. Besser sind jedoch Detektionszeiten von zehn Sekunden bis zwei Minuten. Somit wird sichergestellt, die gesamte Durchquerung der Front detektiert zu haben. Auch Zeiträume von mehreren Stunden können sinnvoll sein - insbesondere dann, wenn der Infraschall nicht kontinuierlich, sondern zu nicht im Voraus antizipierbaren Zeitpunkten eintrifft. Nach einer weiteren Ausführungsform wird die Nebeloberfläche während der Detektion mittels einer Videokamera aufgenommen.

Dies ist u.a. eine Voraussetzung dafür, dass die Ergebnisse der Detektion am Computer, vorzugsweise automatisiert, ausgewertet werden können. Auch ohne die Anwesenheit von Personal während der eigentlichen Datenaufnahme kann so beispielsweise die Häufigkeit von Schallereignissen festgestellt werden, indem im Anschluss an die Detektion im Schnelldurchlauf am Bildschirm nach Schallereignissen gesucht wird.

Zwar wäre eine Aufnahme der von der gerichteten Front erzeugten Veränderungen der Nebeloberfläche auch auf andere Art möglich, z.B. durch Feuchtesensoren am Umfang der Innenseite des Behälters. Die Verwendung einer handelsüblichen Videokamera, vorzugsweise mit eingebautem digitalen Speicher, ist jedoch besonders kostengünstig und einfach realisierbar.

Sofern die physikalischen Zusammenhänge zwischen dem Verhalten der Partikel an der Nebeloberfläche bei Infraschallbestrahlung berechenbar und beispielsweise in einem Modell hinterlegt sind, ist eine Auswertung der Detektionsergebnisse möglich. Aber auch durch Messung bekannter Infraschallquellen mit anderen Verfahren, Ablegen dieser Ergebnisse in einem Speicher, und nachfolgendem Vergleich dieser Ergebnisse mit den Bildern unbekannter Quellen kann ein Rückschluss auf Parameter wie Frequenz und/oder Stärke des Infraschalls gezogen werden (sog. "table-lookup").

Vorzugsweise werden die Bilder der Videokamera einer Bildverarbeitung zur Berechnung der Richtung, der Stärke und/oder der Frequenz des Infraschalls zugeführt. Auf diese Weise entfällt die manuelle optische Beobachtung der Nebeloberfläche, und die Detektion wird zu einer qualitativen und/oder quantitativen "Messung" aufgewertet.

Alternativ kann die Berechnung bzw. der Vergleich auch manuell oder halbautomatisch erfolgen, beispielsweise durch manuelles Vergleichen der Bilder unter bevorzugter Verwendung eines Computers.

Um die Aussagekraft des erfindungsgemäßen Detektionsverfahrens weiter zu verbessern, wird nach einer Ausführungsform eine Bestimmung des jeweiligen Detektionsortes durchgeführt, beispielsweise durch Nutzung eines GPS-Gerätes oder auch durch manuelles Feststellen der Position auf einer Karte.

Auch eine Kontrolle von natürlichen Luftbewegungen, beispielsweise mittels eines Anemometers, ist vorteilhaft. Windrichtung und Windgeschwindigkeit haben Einfluss auf die Ausbreitungsrichtung und (relativ zum Erdboden gemessen) auch auf die Ausbreitungsgeschwindigkeit.

Ferner ist auch eine Kontrolle des Luftdrucks, beispielsweise mittels eines Barometers, vorteilhaft.

Es ist klar, dass alle diese Parameter vorteilhafterweise Eingang in eine manuelle oder besonders bevorzugt automatisierte Auswertung finden können, um die Qualität der Detektion/Messung weiter zu erhöhen.

Das erfindungsgemäße Detektionsverfahren kann auch vorteilhaft dazu eingesetzt werden, die genaue Lage einer Infraschallquelle zu bestimmen. Für ein solches Lokalisierungsverfahren werden eine Mehrzahl von Detektionen, die wie vorstehend beschrieben erfolgen, zeitgleich oder zeitversetzt an verschiedenen Detektionsorten durchgeführt, wobei aus der Lage der gerichteten Front des jeweiligen Detektionsergebnisses in Verbindung mit seinem jeweiligen Detektionsort auf die Richtung der Infraschallquelle geschlossen wird.

Bevorzugt ist die zeitgleiche Detektion, und zwar insbesondere dann, wenn die Infraschallquelle nur temporär Infraschall aussendet. Andernfalls kann auch mit einer einzigen Detektionsvorrichtung, die sequenziell an die verschiedenen Detektionsorte gebracht wird, die Lage der Infraschallquelle rekonstruiert werden. Mittels einfacher trigonometrischer Berechnungen kann bereits bei einem Vorliegen von zwei, vorzugsweise jedoch wenigstens drei Ergebnissen unterschiedlicher (und ausreichend weit voneinander entfernter) Detektionsorte auf die Lage der Infraschallquelle geschlossen werden. Hilfreich ist dabei eine Karte der Umgebung, in welche die Detektionsorte und die Ausrichtung der gerichteten Fronten eingetragen werden können. Selbstverständlich ist auch dieser Vorgang ganz oder teilweise automatisierbar.

Besonders bevorzugt werden die Detektionsorte um eine vermutete Infraschallquelle herum angeordnet. Auf diese Weise ist der Fehler bei der Lokalisation leicht minimierbar. Sofern jedoch die Lage der Infraschallquelle zunächst noch unbekannt ist, kann durch eine Mehrzahl von Detektionen ihre ungefähre Lage bestimmt werden. Alsdann wird die genaue Lage durch entsprechend optimiertes Detektieren/Messen an ggf. weiteren Detektionsorten bestimmt.

Da das erfindungsgemäße Verfahren auch aus der Luft, beispielsweise beim Überfliegen von vermuteten Infraschallquellen anwendbar ist, kann auch auf diese Weise zeitsparend eine zumindest ungefähre Lokalisation unter Durchführung von orts- und zeitversetzten Detektionen erfolgen.

Zur Automatisation können die Nebeloberflächen mittels einer bzw. mehrerer Videokameras aufgenommen und einer Bildverarbeitung zur Berechnung von Richtung der Infraschallquelle und/oder Stärke und/oder Frequenz des Infraschalls am jeweiligen Detektionsort zugeführt werden. Auf die obigen Ausführungen hierzu wird verwiesen. Auf diese Weise wird ein Lokalisierungsverfahren bereitgestellt, mit welchem auf bequeme Weise mindestens die Lage der Infraschallquelle, vorzugsweise aber auch weitere Parameter betreffend den Infraschall am jeweiligen Ort bestimmbar sind. Nachfolgend wird eine Ergänzung des erfindungsgemäßen Detektions- bzw. Lokalisationsverfahrens beschrieben, mit welcher sich die Aussage- und Beweiskraft der durchgeführten Detektionen bzw. Lokalisationen weiter erhöhen lässt.

Zur Unterscheidbarkeit wird nachfolgend mit "Detektion" das Ergebnis einer Detektion mittels des erfindungsgemäßen Detektionsverfahrens (Nebeloberfläche) bezeichnet. Demnach ist der "Detektionsort" vorliegend derjenige Ort, an dem mit dem erfindungsgemäßen Verfahren gemäß obiger Ausführungen detektiert wird. Im Gegensatz dazu können auch "Messungen" eines "Messortes" vorliegen, die mit einem vom Detektionsverfahren verschiedenen, ergänzenden Messverfahren erzielt werden, wie nachfolgend erläutert wird. Ein Detektions- und sein korrespondierender Messort kann, muss jedoch nicht (exakt) ortsgleich sein.

Demnach werden - zusätzlich zu den o.g. Detektionen mittels Nebeloberfläche - mit Mikrofonen, welche eine bestimmte Mindestfrequenz detektieren können, zusätzliche Messungen durchgeführt. Die Mindestfrequenz beträgt dabei beispielsweise 3 Hz, was der typischerweise untersten Frequenz entspricht, die mit herkömmlichen Mikrofonen ausreichend genau messbar ist.

Die erste der zusätzlichen Messungen findet an einem ersten Messort statt, der in etwa einer der Wellenlänge dieser Mindestfrequenz entsprechenden Distanz von der Infraschallquelle entfernt ist. Mit anderen Worten, die erste Messung erfolgt in der Nähe der Infraschallquelle, wobei klar ist, dass deren Position zunächst bestimmt werden muss, wozu das bisher beschriebene Verfahren bevorzugt genutzt wird. Typischerweise beträgt diese Entfernung 100 Meter (Wellenlänge von Schall einer Frequenz von 3 Hz), es können aber auch geringere oder größere Entfernungen vorteilhaft sein, beispielsweise 10 Meter, 50 Meter, 200 Meter oder 500 Meter.

Mindestens eine zweite zusätzliche Messung erfolgt an einem zweiten Messort, der vorzugsweise nur wenige, z.B. zwischen 1 und 10, Meter vom jeweiligen korrespondierenden Detektionsort entfernt ist. Es sei angemerkt, dass mittels der Mikrofone jedoch tatsächlich "gemessen" werden kann, weswegen deren Orte als "Messorte" bezeichnet werden. Der Grund für die (wenn auch geringe) Entfernung liegt in der Geräuschentwicklung begründet, die beim Betrieb einer das erfindungsgemäße durchführenden Vorrichtung entstehen kann, und daher stört.

Es ist klar, dass auch mehr als nur eine weitere zusätzliche Messung erfolgen kann. Vorzugsweise werden für jeden weiteren Detektionsort auch entsprechende Messungen an korrespondierenden Messorten durchgeführt.

Erfindungsgemäß bestehen die zusätzlichen Messungen aus Schallmessungen, die im hörbaren Bereich und/oder im unhörbaren Bereich ab 3 Hz durchgeführt werden. Das bedeutet, dass die zusätzlichen Messungen auch mit anderen Mikrofonen als mit solchen, die bereits 3 Hz-Schwingungen messen können, durchgeführt werden können, z.B. mit Mikrofonen mit einer Mindestfrequenz von 20 Hz. Grundsätzlich sind jedoch niedrigere Frequenzen bevorzugt.

Die zusätzlichen Messungen werden anschließend auf der in Bezug auf die Schallereignisse korrigierten Zeitachse mittels Fingerprint-Verfahren verglichen. Demnach werden die Schallereignisse nur auf der Zeitskala, nicht jedoch im Frequenzbereich untersucht und miteinander verglichen. Der Vergleich dient dazu, Schallereignisse an unterschiedlichen Messorten dem selben Schall- und somit Infraschallereignis zuordnen zu können. Untersuchungen haben überraschend gezeigt, dass Infraschallereignisse häufig mit Oberschwingungen im hörbaren Bereich einhergehen, die auch in großer Entfernung - bis zu 10 km und mehr - gemessen werden können. "Korrigierte Zeitachse bedeutet in diesem Zusammenhang, dass die Zeitachsen der Messungen der beiden Messorte so zueinander verschoben werden, dass die zeitliche Verschiebung, die sich aus der unterschiedlichen Laufzeit des Schalls zu den beiden Messorten ergibt, verschwindet, die Ereignisse auf den Zeitachsen also zueinander synchronisiert sind.

Der Begriff "Fingerprint" meint allgemein das Erkennen durch Herausfiltern der Gemeinsamkeiten von Mustern, so dass diese einander zugeordnet werden können. Bei der vergleichenden akustischen Aufzeichnung von Schallereignissen entstehen charakteristische Signalmuster, die sich z.B. durch Höhe, Gruppierungen von Signalen und Frequenzen auf der Zeitachse zeigen. Somit wird die eindeutige Identifizierung von z.B. einer Schallquelle möglich, indem neben der erfindungsgemäßen Infraschalldetektion flankierend ein Nachweis des zum Infraschallereignis korrespondierenden Schallereignisses im hörbaren (oder knapp unter dieser Grenze liegenden) Bereich erfolgt. Erfindungsgemäß erfolgt das Auswerten der Messergebnisse mittels automatischer (computergestützter) Verfahren. Alternativ kann aber auch eine manuelle oder halbautomatische Auswertung (s.o.) erfolgen.

Vorzugsweise werden die Daten der Infraschalldetektion und der Schallmessungen beim Erfassen mit einem genauen und nicht manipulierbaren Zeitstempel versehen.

Die Erfindung betrifft auch eine Detektionsvorrichtung zur Durchführung des erfindungsgemäßen Detektionsverfahrens.

Eine erfindungsgemäße Detektionsvorrichtung zur Detektion von Infraschall umfasst einen Behälter, der mit einem in Trägermedium gebetteten Nebel derart teilbefüllt ist, dass eine Nebeloberfläche vorliegt, auf welcher sich, einer Infraschallquelle ausgesetzt, über die Zeit eine von dem Infraschallereignis abhängige optisch detektierbare gerichtete Front bildet. Erfindungsgemäß weist die Detektionsvorrichtung eine Bildverarbeitung auf, welcher das aufgezeichnete Bild der Nebeloberfläche zuführbar und von welcher es auswertbar ist. Mit anderen Worten, die Bildverarbeitung sorgt beispielsweise für die Bestimmung der Richtung der Infraschallquelle, legt alle relevanten Daten in einem geeigneten Speicher ab, etc.

Der Behälter ist bevorzugt rund und weist bevorzugt einen Durchmesser von 20 bis 50 Zentimetern auf. Seine Tiefe liegt bevorzugt zwischen 2 und 20 Zentimetern. Zur Verbesserung des Kontrasts zur Nebeloberfläche sind die Innenwände des Behälters dunkel, und bevorzugt schwarz, gefärbt.

Das Trägermedium ist vorzugsweise ein Gas wie insbesondere Luft. Alternativ kann auch eine Flüssigkeit als Trägermedium dienen; zur Vermeidung von Wiederholungen wird auf die obenstehenden Ausführungen verwiesen.

Eine derartige Detektionsvorrichtung ist kostengünstig herstellbar und robust, da zur ihrer Herstellung auf keine teuren oder empfindlichen Komponenten zurückgegriffen werden muss.

Vorzugsweise umfasst die Detektionsvorrichtung eine Beleuchtung, mit welcher die Nebeloberfläche beleuchtbar ist. Auf diese Weise kann die Erkennbarkeit der sich durch Infraschalleinwirkung bildenden gerichteten Front verbessert werden. Als Beleuchtung eignen sich alle bekannten Leuchtmittel. Alternativ oder zusätzlich kann auch ein Stroboskop zum Einsatz kommen. Auch mehrere Beleuchtungen können vorteilhaft sein, beispielsweise LEDs, welche gleichverteilt am Umfang der Innenseite der Detektionsvorrichtung in Höhe der Nebeloberfläche angeordnet sind.

Nach einer Ausführungsform umfasst die Detektionsvorrichtung einen Vernebler, welcher in dem Behälter oder an einer Wand desselben angeordnet ist, so dass er direkt oder indirekt mit einer Flüssigkeit in Kontakt steht, aus welcher der Nebel herstellbar ist, die bevorzugt dunkel gefärbt ist.

Alternativ kann der Nebel auch durch eine Öffnung im Boden oder in der Seitenwand des Behälters einströmen. Eine weitere Ausführungsform nutzt bei Raumtemperatur verdampfendes Material wie Trockeneis zur Erzeugung des Nebels, wobei dafür Sorge zu tragen ist, dass durch das Verdampfen erzeugte Verwirbelungen entweder außerhalb des Behälters auftreten, oder eine Beruhigung des Nebels stattfinden kann, bevor die Detektionsvorrichtung in den eigentlichen Betrieb geht. Auch feste Partikel, die sich nicht auflösen, wie sehr feiner Staub oder dergleichen, können zur Erzeugung des Nebels eingesetzt werden.

Nach einer weiteren Ausführungsform der Detektionsvorrichtung ist deren Behälter gasdicht verschlossen, oder er weist einen Windschutz auf. Da die Detektion von Infraschall häufig auch im Freien stattfinden muss - insbesondere bei der weiträumigen "Einkreisung" von vermuteten Infraschallquellen - ist dafür zu sorgen, dass natürliche Luftbewegungen sich nicht auf die Nebeloberfläche auswirken. Sofern das Material des Behälters nicht zu dick oder dicht ist, um die Infraschallwellen passieren zu lassen, kann der Behälter verschlossen sein, vorzugsweise mit einem transparenten Deckel, um die Sichtbarkeit der Nebeloberfläche zu gewährleisten.

Ein Windschutz hingegen kann beispielsweise durch eine einfache Erhöhung der Seitenwände des Behälters erreicht werden, oder durch die Platzierung der Detektionsvorrichtung in einem vor Luftbewegungen schützenden Zelt, Fahrzeug oder dergleichen. Als Material kommt insbesondere luftdurchlässiger, aber windabweisender Stoff oder Samt, weniger bevorzugt hingegen luftdichte Kunststofffolie für den Windschutz in Betracht. Optional ist der Windschutz auch gegen Nässe/Regen imprägniert. Er kann als haubenartiger Überzug ausgestaltet sein, welcher bei Bedarf über die als Gestell aufgebaute Detektionsvorrichtung gestülpt wird.

Vorzugsweise umfasst die Detektionsvorrichtung eine Videokamera, mit welcher die Nebeloberfläche aufzeichenbar ist. Eine hohe Auflösung wie beispielsweise "Full HD" (1080p) ist dabei bevorzugt. Die vorzugsweise in digitaler Form vorliegenden Videodaten können dann ohne weitere Aufbereitung weitergeleitet werden.

Die Kamera sollte so angeordnet sein, dass sie in etwa senkrecht zur Ausbreitungsrichtung der gerichteten Front verläuft. Für den typischen Fall einer sich in etwa waagerecht ausbreitenden Front ist die Videokamera daher oberhalb des Behälters anzubringen. Selbstverständlich ist ein Bildfeld, welches der Größe der Nebeloberfläche entspricht oder diese nur unwesentlich über- oder unterschreitet, sinnvoll.

Ferner ist bevorzugt, dass die Detektionsvorrichtung eine Einrichtung zur Bestimmung des jeweiligen Messortes z.B. mittels GPS, und/oder eine Einrichtung zur Kontrolle von natürlichen Luftbewegungen z.B. mittels eines Anemometers, und/oder eine Einrichtung zur Kontrolle des Luftdrucks z.B. mittels eines Barometers aufweist. Zur Vermeidung von Wiederholungen wird auf die obigen Ausführungen hierzu verwiesen. Die Komponenten können als separate Geräte vorliegen oder in ein Gesamtsystem integriert sein, welches besonders bevorzugt auch die Bildverarbeitung und weitere Auswertung der Daten übernimmt.

Weitere Verbesserungen betreffen eine für den Benutzer/die Videokamera sichtbare Markierung, welche in eine bestimmte Himmelsrichtung (z.B. nach Norden) weist. Die Detektionsvorrichtung hat vorzugsweise Beine, welche einen Aufbau in einer genormten Höhe, z.B. 1,20 m, erlauben.

Außerdem betrifft die Erfindung die Verwendung einer vorstehend beschriebenen Vorrichtung, also einer Vorrichtung mit einem Behälter, der mit einem in Trägermedium gebetteten Nebel derart teilbefüllbar ist, dass eine Nebeloberfläche vorliegt, zur Detektion von Infraschall. Anders ausgedrückt, die Erfindung wird getragen von der überraschenden Erkenntnis, dass ein eine Nebeloberfläche aufweisender Behälter zur Detektion von Infraschallereignissen geeignet ist. Es ist klar, dass sich die Verwendung vorzugsweise auf die Verwendung einer der oben genannten Ausführungsformen mit weiteren Komponenten (z.B. Videokamera, Beleuchtung, ...) zur Detektion von Infraschallereignissen erstreckt.

Die Erfindung betrifft auch ein Lokalisationssystem zur Lokalisierung einer Infraschallquelle. Ein solches Lokalisationssystem weist als Kern eine Mehrzahl von Detektionsvorrichtungen der vorstehend beschriebenen, erfindungsgemäßen Art auf. Mindestens zwei, besser mindestens drei solcher Detektionsvorrichtungen werden demnach zu einem Lokalisationssystem zusammengefasst.

Es ist klar, dass besonders bevorzugt entsprechende Datenverbindungen, auch per Mobilfunk, zwischen den einzelnen Detektionsvorrichtungen bestehen sollten, damit die gewonnenen Daten unmittelbar einer Auswertung zuführbar sind. Alternativ können die Daten auch "offline" gewonnen und nach Abschluss der Datenaufnahme einer Auswertung zugeführt werden, oder sie können paketweise, beispielsweise stündlich, an eine entsprechend ausgestattete Empfängereinheit übermittelt werden. Zum Zwischenspeichern der Daten kann beispielsweise eine Speicherkarte oder ein handelsüblicher USB-Stick benutzt werden.

Die Wirkungsweise eines solchen, aus mehreren Detektionsvorrichtungen bestehenden Lokalisationssystems wurde ebenfalls bereits weiter oben erläutert und wird daher vorliegend nicht wiederholt.

Zur Verbesserung des Detektions- bzw. Lokalisationsergebnisses lässt sich die erfindungsgemäße Detektionsvorrichtung bzw. das erfindungsgemäße Lokalisationssystem mit der ebenfalls bereits beschriebenen Schallmessung kombinieren. Demnach umfasst eine erfindungsgemäße Detektionsvorrichtung bzw. ein erfindungsgemäßes Lokalisationssystem ferner mindestens zwei Schallmesseinrichtungen für Schall, welche wie vorstehend beschrieben ausgeführt und positionierbar sind, wobei deren Messergebnisse einer Auswerteeinheit zum Vergleich der beiden Messergebnisse zuführbar sind. Mit anderen Worten, das Messsystem wird um die Fähigkeit der Aufnahme von Schall an zwei Messorten erweitert, und die zusätzlichen Messergebnisse werden besonders bevorzugt einer computergestützten Auswerteeinheit bereitgestellt, welche ebenfalls Teil des Messsystems sein kann, oder derselben lediglich zugeordnet ist.

Die vorgeschlagene Erfindung löst die aus dem Stand der Technik bekannten Probleme. Sie stellt ein kostengünstiges Detektionsverfahren für Infraschall, ein Lokalisationsverfahren für Infraschallquellen, sowie eine Vorrichtung zur Durchführung dieser Detektions- bzw. Lokalisationsverfahren bereit.

### Figurenbeschreibung

- **Figur 1**: zeigt eine schematische Anordnung von Detektionseinrichtungen zur Lokalisation einer Infraschallquelle.
- **Figur 2**: zeigt eine einfaches Verfahren zur Lokalisation mittels Lage- und Zeitstempel.
- **Figur 3**: zeigt eine bevorzugte Ausführungsform der erfindungsgemäßen Detektionsvorrichtung.
- **Figur 4**: zeigt eine Ausführungsform der erfindungsgemäßen Detektionsvorrichtung in perspektivischer Ansicht.
- **Figur 5**: zeigt die Messergebnisse mit zwei Schallmesseinrichtungen vor der Synchronisation.
- **Figur 6**: zeigt die Messergebnisse mit zwei Schallmesseinrichtungen nach der Synchronisation.
- **Figur 7**: zeigt den übereinstimmende Fingerprints zweier synchronisierter Messergebnisse im Frequenzspektrum.

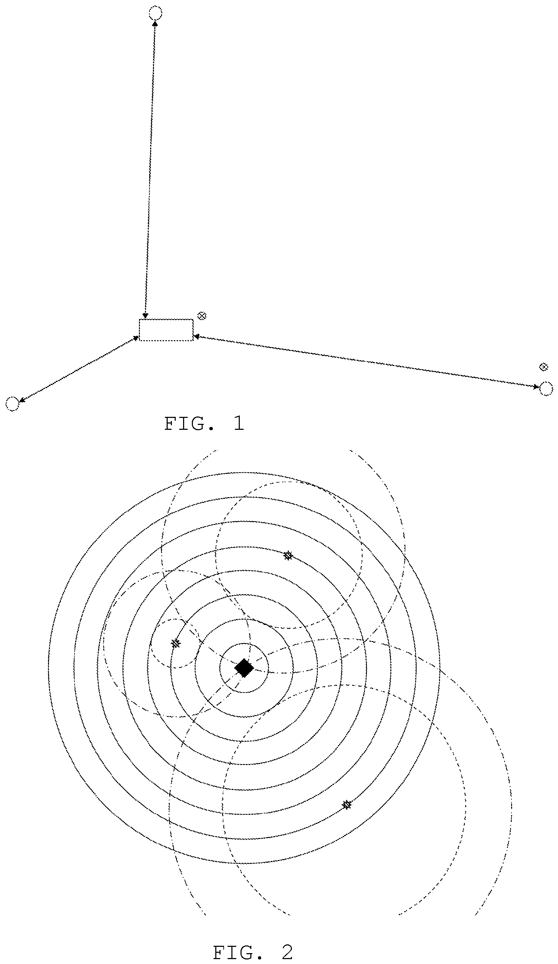

Die **Figur 1** zeigt, wie mit einer Mehrzahl (hier: drei) Detektionseinrichtungen, die als leere Kreise ohne Bezugszeichen dargestellt sind, die Lokalisation einer vermuteten Infraschallquelle durchgeführt wird. Letztere wird schematisch durch das Rechteck im mittleren Bereich der Fig. symbolisiert.

Die unterschiedlich langen Doppelpfeile deuten die unterschiedlichen Entfernungen zwischen Infraschallquelle und Detektionseinrichtungen an. Die unten links im Bild befindliche Detektionseinrichtung wird ein Infraschallereignis früher als die oben im Bild befindliche, und diese wiederum als die rechts im Bild befindliche detektieren. Die Ankunftszeiten des Schallereignisses werden mittels Zeitstempel festgehalten. Die Schallgeschwindigkeit ist typischerweise bekannt. Anschließend kann anhand der Zeitstempel und bei bekannten Detektionsorten auf die Lage der Infraschallquelle geschlossen werden (vgl. Fig. 2).

Es ist klar, dass die Lokalisation auch anhand der gerichteten Fronten der einzelnen Detektionen möglich ist, wobei mindestens zwei Detektionen an entfernt voneinander liegenden Detektionsorten benötigt werden. Werden in einer Karte Linien eingezeichnet, die senkrecht zu den jeweiligen Fronten und in der Blattebene verlaufen, so zeigt ihr Kreuzungspunkt die (zumindest ungefähre) Lage der Infraschallquelle an.

Zusätzlich sind noch zwei Mikrofone für Schallmessungen vorhanden (Kreise mit Kreuz). Eine dieser Schallmesseinrichtungen ist in der Nähe der Infraschallquelle angeordnet, beispielsweise 100 m davon entfernt. Die andere befindet sich in der unmittelbaren Nähe eines der drei typischerweise mehrere km entfernt liegenden Detektionsorte, vorliegend dem unten rechts im Bild gezeigten. Der Abstand beträgt dort nur wenige Meter. Die Messungen der Schallereignisse werden aufgezeichnet und können beispielsweise mittels Fingerprint-Techniken aus der Gesamtmessung herausgefiltert und einander zugeordnet werden, nachdem deren Zeitachsen so zueinander verschoben wurden, dass die Schallereignisse zueinander synchronisiert sind.

In der **Fig. 2** wird gezeigt, wie auf einfache Weise eine Lokalisierung mittels der Lage- und Zeitstempel mehrerer Detektionen durchgeführt werden kann. Im Zentrum des als Draufsicht auf eine Karte aufzufassenden Bildes ist die Infraschallquelle als dunkle Raute dargestellt. Von ihr breiten sich Infraschallwellen in alle Richtungen gleichmäßig aus (durchgezogene Kreise). Drei Detektionsvorrichtungen sind an unterschiedlichen Detektionsorten aufgestellt, dargestellt als kleine sternförmige Objekte.

Zum Zeitpunkt t₀ = 0 wird der Infraschall erzeugt. Die Abstände der Wellenfronten seien 330 m. Dann erreicht die erste Wellenfront die erste Detektionsvorrichtung links im Bild nach t₁ = 3 s, die oben im Bild (2. Detektionsvorrichtung) nach t₂ = 5 s, und die unten im Bild (3. Detektionsvorrichtung) nach t₃ = 7 s. Die Zeitstempel der Detektionsvorrichtungen zeigen also Zeiten, die (in Bezug auf die noch unbekannte Ursprungszeit des Signals) 3, 5 bzw. 7 s später liegen. Zeigten diese Zeitstempel beispielsweise t₁* = 13 s, t₂* = 15 s und t₃* = 17 s, so läge der (zunächst unbekannte) Zeitstempel der Quelle tatsächlich bei 10 s.

Die Aufgabe besteht demnach darin, die Lage einer Quelle zu finden, welche zu den Zeitstempeln der Detektionsvorrichtungen "passt". Hierzu kann um die erste Detektionsvorrichtung zunächst probeweise ein (erster) Kreis mit einem Radius von 1·330 m (entsprechend einer Laufzeit des Schalls von 1 s) gezogen werden (gestrichelte Linie). Um die zweite Detektionsvorrichtung wird ein Kreis mit einem Radius gezogen, den der Schall in einer Zeit von (t₂*-t₁*)+1s = (15s-13s)+1s = 3 s zurücklegt, also 990 m, entsprechend dem Abstand von drei Wellenfronten. Analog dazu wird um die dritte Detektionsvorrichtung ein Kreis mit einem Radius gezogen, den der Schall in (t₃*-t₁*)+1s = (17s-13s)+1s = 5 s zurücklegt, also 1650 m, entsprechend dem Abstand von fünf Wellenfronten.

Jedoch haben diese Kreise, in der Fig. 2 alle gestrichelt dargestellt, noch keinen gemeinsamen Kreuzungspunkt.

Nun wird um die erste Detektionsvorrichtung ein weiterer (zweiter) Kreis mit einem Radius von 2·330 m = 660 m (entsprechend einer Laufzeit des Schalls von 2·1s) gezogen. Analog werden entsprechende Kreise um die beiden anderen Detektionsvorrichtungen gezogen (diese drei Kreise sind nicht dargestellt). Auch hier ergibt sich kein Kreuzungspunkt.

Wird jedoch bei der ersten Detektionsvorrichtung nunmehr mit einem Radius von 3·330 m = 990 m gestartet (entsprechend einer Laufzeit des Schalls von 3·1s), so erhält man 5 s bzw. 7 s für die beiden anderen Detektionsvorrichtungen. Kreise mit diesen Radien (strichpunktiert dargestellt) um die drei Detektionsvorrichtungen treffen sich gerade im Ort der Infraschallquelle (schwarze Raute im Zentrum des Bildes).

Es ist klar, dass diese Aufgabe auch automatisiert und/oder auf analytischem Wegen zu lösen ist. Wichtig ist jedoch, das dieses Verfahren auch ohne die Berücksichtigung der Ausrichtung der Wellenfronten durchgeführt werden kann, wobei aber das erfindungsgemäße Verfahren zur Detektion der Infraschallwellen genutzt werden sollte, insbesondere dann, wenn nicht oder nur sehr schwach hörbare korrespondierende Schallereignisse vorliegen.

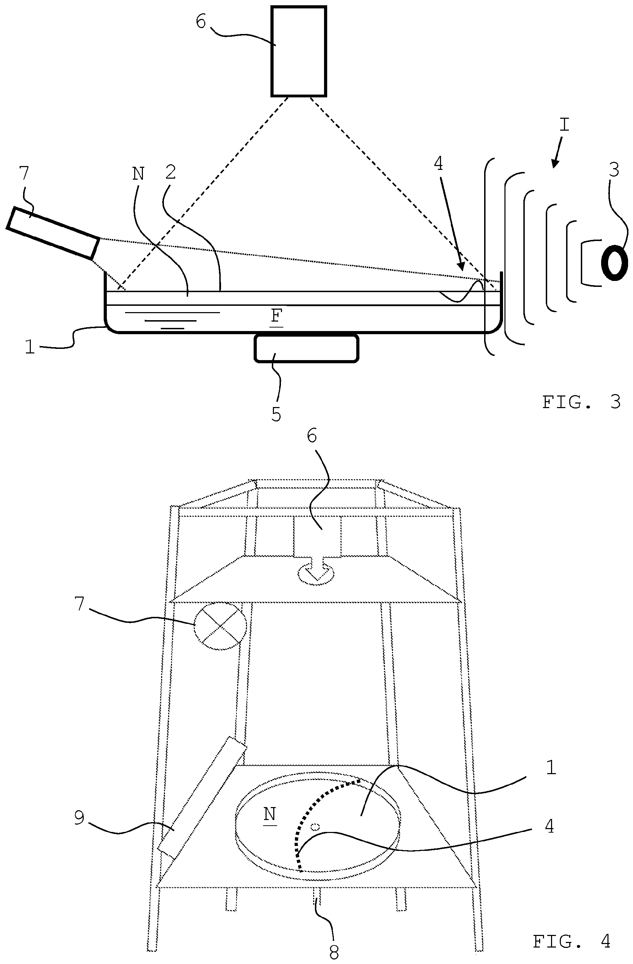

In der **Figur 3** ist eine bevorzugte Ausführungsform der erfindungsgemäßen Detektionsvorrichtung gezeigt. Diese umfasst einen Behälter 1, welcher nach der dargestellten Ausführungsform eine Wanne ist. In dieser befindet sich eine Flüssigkeit F wie vorzugsweise Wasser.

Am Boden des Behälters 1 ist ein Vernebler 5 angeordnet. Dieser erzeugt mittels Vibration, die durch die Wand übertragen wird, oberhalb der Flüssigkeitsoberfläche einen feinen Nebel N, der in ein gasförmiges Trägermedium, vorliegend Luft, eingebettet ist. Der Nebel weist an seiner Oberseite eine Nebeloberfläche 2 auf.

Von einer entfernt angeordneten Infraschallquelle 3 wird Infraschall I ausgesendet. Die Infraschallquelle 3 befindet sich in etwa in der gleichen Ebene wie die Nebeloberfläche 2, ist also im Wesentlichen weder oberhalb noch unterhalb, sondern seitlich von der Detektionsvorrichtung angeordnet. Der Infraschall I führt bei Eintreffen in der Detektionsvorrichtung zu einer gerichteten Front 4, welche sich in Abhängigkeit der Zeit ändert. Das Aussehen der Front 4 hängt von der Stärke und Frequenz des Infraschalls I ab.

Um die Front 4 besser erkennbar zu machen, weist die Detektionsvorrichtung eine Beleuchtung 7 auf. Diese beleuchtet die Nebeloberfläche 2 (Strahlungskegel durch punktierte Linien angedeutet). Vorzugsweise ist die Beleuchtung 7 seitlich etwas oberhalb der Nebeloberfläche 2 angeordnet.

Die Detektionsvorrichtung weist außerdem eine Videokamera 6 auf. Diese ist so angeordnet, dass sie nach Möglichkeit die gesamte Nebeloberfläche 2 aufnehmen kann (Bildbereich durch gestrichelte Linien angedeutet). Nicht gezeigt sind elektrische Zuleitungen zur Spannungsversorgung von Beleuchtung 7, Vernebler 5 und Videokamera 6, oder Ableitungen zur Weiterleitung der Bilder an eine ebenfalls nicht dargestellte Bildverarbeitung, mit welcher die aufgenommenen Bilder auswertbar sind.

Die **Fig. 4** zeigt eine perspektivische Ansicht einer Ausführungsform der erfindungsgemäßen Detektionsvorrichtung. Diese umfasst einen runden Behälter 1, welcher mit einem Nebel N gefüllt ist, so dass sich die erfindungsgemäße Nebeloberfläche ergibt (nicht gezeigt). Der Nebel N wird von einem nicht dargestellten Vernebler außerhalb des Behälters 1 erzeugt und über einen Nebeleinlass 8 dem Behälter 1 zugeführt. Unterhalb der Detektionsvorrichtung ist Platz für eine Stromversorgung (Akku, nicht gezeigt). Oberhalb des Behälters 1 ist die Videokamera 6 angeordnet, mit Blickrichtung auf den Behälter 1. Schräg oberhalb des Behälters 1 befindet sich eine Beleuchtung 7 zur Verbesserung der Erkennbarkeit der gerichteten Front 4, die sich aufgrund eines eintreffenden Infraschallereignisses durch den Behälter 1 bewegt (punktierte Linie). Außerdem umfasst die Detektionsvorrichtung eine Ablage 9 für Instrumente (Zeitmessung, GPS, etc.).

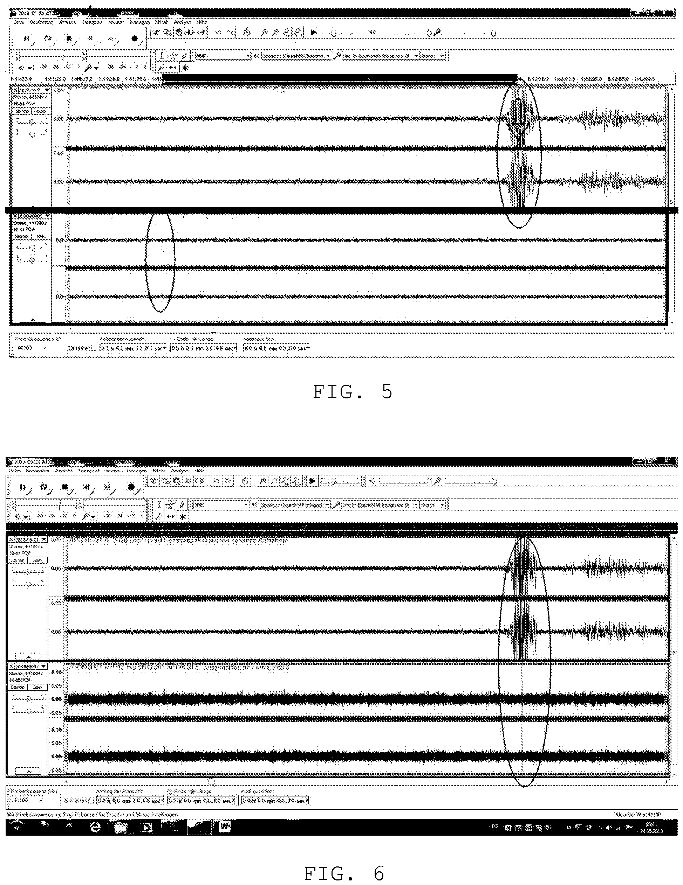

In **Fig. 5** sind die Messergebnisse zweier, die Detektionsvorrichtung ergänzender Schallmesseinrichtungen übereinander dargestellt. In y-Richtung ist die Amplitude aufgezeichnet, in x-Richtung die Zeit. Die oval eingekreisten Bereiche rühren von demselben Schallereignis her. Durch Verschieben der Zeitachsen können diese beiden Messungen zueinander synchronisiert erscheinen, wie in **Fig. 6** gezeigt. Aufgrund der Verschiebung kann auch auf die Entfernung der beiden Messorte geschlossen werden.

Die Verschiebung kann zunächst theoretisch aus der tatsächlichen Entfernung zum Bezugspunkt (1. Messort, bei Infraschallquelle) sowie der Schallgeschwindigkeit berechnet werden. In den so zueinander (vor-)synchronisierten Messungen kann bereits nach Übereinstimmungen gesucht werden. Bei zunehmender Entfernung werden jedoch Faktoren wie Wind, Regen, Luftdruckschwankungen etc. dazu beitragen, dass die berechnete Verschiebung nachangepasst werden muss, um die übereinstimmenden Messereignisse tatsächlich synchronisiert darzustellen. Bei einer Zeitverzögerung von 30 Sekunden (entsprechend ca. 10 km Entfernung) beträgt die Abweichung des berechneten vom tatsächlichen Wert der Verschiebung 1 - 3 Sekunden. Sie wächst bei zunehmender Entfernung meist weiter, sofern sich die Faktoren nicht zufällig kompensieren.

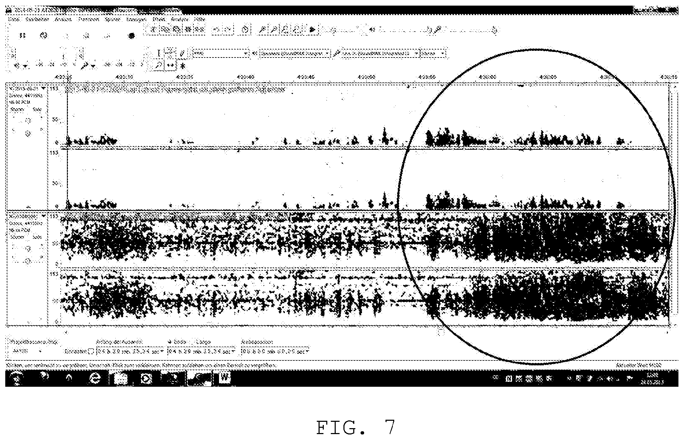

In **Fig. 7** ist zu erkennen, wie ein Vergleich (Fingerprint) von Messergebnissen im Frequenzspektrum dargestellt wird. Zur besseren Reproduzierbarkeit wurde der Kontrast erhöht, so dass jedenfalls die relevanten Bildbestandteile gut erkennbar sind. Dies sind die rechts im Bild im Kreis befindlichen Spektren, die dem gleichen Schallereignis zugeordnet werden, das an zwei unterschiedlichen Messorten (einmal nah an der Quelle, einmal weit davon entfernt) aufgenommen wurde. Die zeitliche Abfolge der Spektren und ihrer Veränderungen lässt diesen Schluss unmittelbar zu.

### Bezugszeichenliste

- 1: Behälter
- 2: Nebeloberfläche
- 3: Infraschallquelle
- 4: Front
- 5: Vernebler
- 6: Videokamera
- 7: Beleuchtung
- 8: Nebeleinlass
- 9: Ablage
- I: Infraschall
- N: Nebel
- F: Flüssigkeit

## Patentansprüche

1. Detektionsverfahren zur Detektion von Infraschall (I) an einem Messort, wobei ein Behälter (1), der mit einem in Trägermedium gebetteten Nebel (N) derart teilgefüllt ist, dass eine Nebeloberfläche (2) vorliegt, einer entfernten Infraschallquelle (3) ausgesetzt wird, so dass die sich ergebende Druckänderung über die Zeit zur Bildung einer optisch detektierbaren gerichteten Front (4) an der Nebeloberfläche (2) führt, **dadurch gekennzeichnet, dass** die Nebeloberfläche (2) optisch detektiert und manuell, halbautomatisch oder automatisch ausgewertet wird.

2. Detektionsverfahren nach Anspruch 1, wobei die Nebeloberfläche (2) beleuchtet wird.

3. Detektionsverfahren nach Anspruch 1 oder 2, wobei der Nebel (N) einer vernebelbaren Flüssigkeit (F) entstammt und durch einen Vernebler (5) erzeugt wird, welcher in dem Behälter (1) oder an einer Wand desselben angeordnet ist.

4. Detektionsverfahren nach einem der Ansprüche 1 bis 3, wobei die Detektion über einen bestimmten Zeitraum erfolgt.

5. Detektionsverfahren nach einem der vorhergehenden Ansprüche, wobei ferner eine Bestimmung des jeweiligen Detektionsortes erfolgt, und/oder eine Kontrolle von natürlichen Luftbewegungen erfolgt, und/oder eine Kontrolle des Luftdrucks erfolgt.

6. Lokalisierungsverfahren zur Lokalisierung einer Infraschallquelle (3), bei dem eine Mehrzahl von Detektionen nach einem der vorhergehenden Ansprüche zeitgleich oder zeitversetzt an verschiedenen Orten durchgeführt werden, wobei aus der Lage der gerichteten Front (4) des jeweiligen Detektionsergebnisses in Verbindung mit seinem jeweiligen Detektionsort auf die Richtung der Infraschallquelle (3) geschlossen wird.

7. Detektionsverfahren nach einem der Ansprüche 1 bis 5 bzw. Lokalisationsverfahren nach Anspruch 6, bei dem zusätzlich mit Mikrofonen, welche eine bestimmte Mindestfrequenz detektieren können, an einem ersten Messort, der in etwa einer der Wellenlänge dieser Mindestfrequenz entsprechenden Distanz von der Infraschallquelle (3) entfernt ist, und mindestens an einem zweiten Messort, der wenige Meter vom jeweiligen korrespondierenden Detektionsort gemäß Definition in einem der vorhergehenden Ansprüche entfernt ist, Schallmessungen im hörbaren Bereich und/oder im unhörbaren Bereich ab 3 Hz durchgeführt werden, welche anschließend auf der in Bezug auf die Schallereignisse korrigierten Zeitachse mittels Fingerprint-Verfahren verglichen werden.

8. Detektionsvorrichtung zur Detektion von Infraschall (I), umfassend einen Behälter (1), der mit einem in Trägermedium gebetteten Nebel (N) derart teilbefüllt ist, dass eine Nebeloberfläche (2) vorliegt, auf welcher sich, einer entfernten Infraschallquelle (3) ausgesetzt, über die Zeit eine von dem Infraschallereignis abhängige optisch detektierbare gerichtete Front (4) bildet, **dadurch gekennzeichnet, dass** die Detektionsvorrichtung ferner eine zur Auswertung der optisch detektierten Front (4) eingerichtete Bildverarbeitung umfasst.

9. Detektionsvorrichtung nach Anspruch 8, wobei dieselbe eine Beleuchtung (7) umfasst, mit welcher die Nebeloberfläche (2) beleuchtbar ist.

10. Detektionsvorrichtung nach Anspruch 8 oder 9, wobei dieselbe einen Vernebler (5) umfasst, welcher in dem Behälter (1) oder an einer Wand desselben angeordnet ist, so dass er direkt oder indirekt mit einer Flüssigkeit (F) in Kontakt steht, aus welcher der Nebel (N) herstellbar ist.

11. Detektionsvorrichtung nach einem der Ansprüche 8 bis 10, wobei deren Behälter (1) gasdicht verschlossen ist oder einen Windschutz aufweist.

12. Detektionsvorrichtung nach einem der Ansprüche 8 bis 11, wobei dieselbe eine Videokamera (6) aufweist, mit welcher die Nebeloberfläche (2) aufzeichenbar ist.

13. Detektionsvorrichtung nach einem der Ansprüche 8 bis 12, wobei dieselbe ferner eine Einrichtung zur Bestimmung des jeweiligen Messortes, und/oder eine Einrichtung zur Kontrolle von natürlichen Luftbewegungen, und/oder eine Einrichtung zur Kontrolle des Luftdrucks aufweist.

14. Lokalisationssystem zur Lokalisierung einer Infraschallquelle (3), mit einer Mehrzahl von Detektionsvorrichtungen, jeweils umfassend einen Behälter (1), der mit einem in Trägermedium gebetteten Nebel (N) derart teilbefüllt ist, dass eine Nebeloberfläche (2) vorliegt, auf welcher sich, einer entfernten Infraschallquelle (3) ausgesetzt, über die Zeit eine von dem Infraschallereignis abhängige optisch detektierbare gerichtete Front (4) bildet, so dass eine Mehrzahl von Detektionen zeitgleich an verschiedenen Orten durchführbar sind, wodurch aus der Lage der gerichteten Front (4) des jeweiligen Detektionsergebnisses in Verbindung mit seinem jeweiligen Detektionsort die Richtung der Infraschallquelle (3) bestimmbar ist.

15. Detektionsvorrichtung nach einem der Ansprüche 8 bis 13 bzw. Lokalisationssystem nach Anspruch 14, ferner umfassend mindestens zwei, gemäß Definition in Anspruch 7 positionierbaren Schallmesseinrichtungen für Schall gemäß Definition in Anspruch 7, deren Messergebnisse einer Auswerteeinheit zum Vergleich der beiden Messergebnisse zuführbar sind.

## Claims

1. Detection method for the detection of infrasound (I) at a measurement site, wherein a container (1) is exposed to a remote infrasound source (3), the container (1) being partially filled in a way with a mist (N) which is embedded in a carrier medium such that a mist surface (2) is present, so that the resulting pressure change over time results in the formation of a directed front (4) at the mist surface (2), **characterized in that** the mist surface (2) is optically detected and manually, semi-automatically or automatically evaluated.

2. Detection method according to claim 1, wherein the mist surface (2) is illuminated.

3. Detection method according to claim 1 or 2, wherein the mist (N) originates from a liquid (F) that can be nebulized and is generated by means of a nebulizer (5) which is arranged inside the container (1) or at a wall thereof.

4. Detection method according to any one of claims 1 to 3, wherein the detection takes place over a certain period of time.

5. Detection method according to any one of the preceding claims, wherein further, a determination of the respective detection site takes place, and/or wherein a control of natural air movements takes place, and/or wherein a control of the barometric pressure takes place.

6. Locality determination method for the locality determination of an infrasound source (3) in which a multitude of detections are carried out simultaneously or time-delayed at different sites according to any one of the preceding claims, wherein the direction of the infrasound source (3) is deduced from the position of the directed front (4) of the respective detection result together with its according detection site.

7. Detection method according to any one of claims 1 to 5, or locality determination method according to claim 6, wherein additionally, sound measurements by means of microphones which can detect a certain minimum frequency are carried out in the audible region and/or in the inaudible region at or above 3 Hz, the sound measurements being subsequently compared by means of fingerprint methods with respect to the time axis which is corrected with regard to these sound events, the sound measurements being carried out at a first measurement site which has a distance from the infrasound source (3) approximately corresponding to the wavelength of said minimum frequency, and at a second measurement site which is located a few meters away from the respectively corresponding measurement site.

8. Detection apparatus for the detection of infrasound (I), comprising a container (1) which is partially filled in a way with a mist (N) being embedded in a carrier medium such that a mist surface (2) is present on which, when exposed to a remote infrasound source (3), over time, an optically detectable directed front (4) can be formed which depends on the infrasound event, **characterized in that** the detection apparatus further comprises an image processing device arranged for the evaluation of the optically detected front (4).

9. Detection apparatus according to claim 8, wherein the same comprises an illumination (7) by means of which the mist surface (2) can be illuminated.

10. Detection apparatus according to claim 8 or 9, wherein the same comprises a nebulizer (5) which is arranged inside the container (1) or at a wall thereof, so that the nebulizer (5) is in direct or indirect contact with a liquid (F) from which the mist (N) can be formed.

11. Detection apparatus according to any one of claims 8 to 10, wherein the container (1) is hermetically sealed, or comprises a wind protector.

12. Detection apparatus according to any one of claims 8 to 11, wherein the same has a video camera (6) by means of which the mist surface (2) can be recorded.

13. Detection apparatus according to any one of claims 8 to 12, wherein the same further comprises a device for the determination of the respective measurement site, and/or a device for the control of natural air movements, and/or a device for the control of the barometric pressure.

14. Locality determination system for the locality determination of an infrasound source (3), with a multitude of detection apparatuses, each respectively comprising a container (1) which is partially filled in a way with a mist (N) being embedded in a carrier medium such that a mist surface (2) is present on which, when exposed to a remote infrasound source (3), over time, an optically detectable directed front (4) forms which depends on the infrasound, so that a multitude of detections can simultaneously be carried out at different sites, from which the direction of the infrasound source (3) can be determined from the position of the directed front (4) of the respective detection result together with its according detection site.

15. Detection apparatus according to any one of claims 8 to 13 or locality determination system according to claim 14, further comprising at least two sound measurement devices for sound according to definition in claim 7 which can be positioned as defined in claim 7, the measurement results of which can be fed to an evaluation device for the purpose of comparison.

## Revendications

1. Procédé de détection destiné à la détection d'infrasons (I) en un lieu de mesure, dans lequel un contenant (1), qui est partiellement rempli d'un brouillard (N) incorporé dans un milieu porteur de telle manière qu'une surface de brouillard (2) est présente, est exposé à une source d'infrasons (3) éloignée, de telle sorte que le changement de pression intervenant dans le temps entraîne la formation sur la surface de brouillard (2) d'un front orienté (4) détectable optiquement, **caractérisé en ce que** la surface de brouillard (2) est détectée optiquement et est évaluée manuellement, semi-automatiquement ou automatiquement.

2. Procédé de détection selon la revendication 1, dans lequel la surface de brouillard (2) est éclairée.

3. Procédé de détection selon la revendication 1 ou 2, dans lequel le brouillard (N) provient d'un liquide (F) pouvant être nébulisé et est généré par un nébuliseur (5), qui est disposé dans le contenant (1) ou sur une paroi de celui-ci.

4. Procédé de détection selon l'une des revendications 1 à 3, dans lequel la détection s'effectue sur un laps de temps défini.

5. Procédé de détection selon l'une des revendications précédentes, dans lequel une détermination du lieu de détection respectif est en outre effectuée, et/ou un contrôle de mouvements naturels de l'air est effectué, et/ou un contrôle de la pression de l'air est effectué.

6. Procédé de localisation destiné à localiser une source d'infrasons (3), dans lequel une pluralité de détections selon l'une des revendications précédentes sont effectuées simultanément ou décalées dans le temps en différents lieux, dans lequel la direction de la source d'infrasons (3) est déduite de la position du front orienté (4) provenant du résultat de détection respectif en combinaison avec son lieu de détection respectif.

7. Procédé de détection selon l'une des revendications 1 à 5 ou procédé de localisation selon la revendication 6, dans lequel en outre, au moyen de microphones, qui peuvent détecter une fréquence minimale définie, des mesures acoustiques sont effectuées dans le domaine audible et/ou dans le domaine inaudible à partir de 3 Hz, en un premier lieu de mesure, qui est éloigné de la source d'infrasons (3) à environ une distance correspondant à la longueur d'onde de cette fréquence minimale, et au moins en un second lieu de mesure, qui est éloigné de quelques mètres du lieu de détection respectif correspondant selon la définition de l'une des revendications précédentes, les mesures acoustiques étant ensuite comparées au moyen d'un procédé d'empreinte digitale sur l'axe de temps corrigé par rapport aux événements acoustiques.

8. Dispositif de détection destiné à la détection d'infrasons (I), comprenant un contenant (1), qui est rempli partiellement d'un brouillard (N) incorporé dans un milieu porteur de telle manière qu'une surface de brouillard (2) est présente, sur laquelle se forme dans le temps, quand elle est exposée à une source d'infrasons (3) éloignée, un front orienté (4) détectable optiquement dépendant de l'événement infrasonore, **caractérisé en ce que** le dispositif de détection comprend en outre un traitement d'image configuré pour l'évaluation du front (4) détecté optiquement.

9. Dispositif de détection selon la revendication 8, celui-ci comprenant un éclairage (7), au moyen duquel la surface de brouillard (2) peut être éclairée.

10. Dispositif de détection selon la revendication 8 ou 9, celui-ci comprenant un nébuliseur (5), qui est disposé dans le contenant (1) ou sur une paroi de celui-ci, de telle sorte qu'il est en contact direct ou indirect avec un liquide (F), à partir duquel le brouillard (N) peut être produit.

11. Dispositif de détection selon l'une des revendications 8 à 10, dont le contenant (1) est fermé de manière étanche aux gaz ou comporte une protection contre le vent.

12. Dispositif de détection selon l'une des revendications 8 à 11, celui-ci comprenant une caméra vidéo (6), qui permet d'enregistrer la surface de brouillard (2).

13. Dispositif de détection selon l'une des revendications 8 à 12, celui-ci comportant en outre un moyen destiné à déterminer le lieu de mesure respectif, et/ou un moyen destiné à contrôler des mouvements naturels de l'air, et/ou un moyen destiné à contrôler la pression de l'air.

14. Système de localisation destiné à la localisation d'une source d'infrasons (3), comprenant une pluralité de dispositifs de détection, comportant respectivement un contenant (1), qui est rempli partiellement d'un brouillard (N) incorporé dans un milieu porteur de telle manière qu'une surface de brouillard (2) est présente, sur laquelle se forme dans le temps, quand elle est exposée à une source d'infrasons (3) éloignée, un front orienté (4) détectable optiquement dépendant de l'événement infrasonore, de telle sorte qu'une pluralité de détections peuvent être effectuées simultanément en différents lieux, moyennant quoi la direction de la source d'infrasons (3) peut être déduite de la position du front orienté (4) provenant du résultat de détection respectif en combinaison avec son lieu de détection respectif.

15. Dispositif de détection selon l'une des revendications 8 à 13 ou système de localisation selon la revendication 14, comprenant en outre au moins deux moyens de mesure acoustique pouvant être positionnés selon la définition de la revendication 7, pour du son selon la définition de la revendication 7, dont les résultats de mesure peuvent être transmis à une unité d'évaluation pour la comparaison des deux résultats de mesure.
